# EUROPEAN PATENT SPECIFICATION

(11) **EP 4 326 539 B1**
(45) Date of publication and mention of the grant of the patent: **18.03.2026**
(21) Application number: 22724097.5
(22) Date of filing: 21.04.2022
(51) Int. Cl.: B29C 70/54, B29C 33/68, B29C 37/00

(54) **USE OF POLYMETHYLPENTENE FILM AS RELEASE FILM IN A METHOD FOR SHAPING COMPOSITE MATERIAL**
VERWENDUNG VON POLYMETHYLPENTENFILM ALS TRENNFOLIE IN EINEM VERFAHREN ZUR FORMUNG EINES VERBUNDMATERIALS
UTILISATION DE FILM DE POLYMÉTHYLPENTÈNE COMME FILM DÉTACHABLE DANS UN PROCÉDÉ DE MISE EN FORME D'UN MATÉRIAU COMPOSITE

(30) Priority: 23.04.2021 EP 21170320
(43) Date of publication of application: 28.02.2024
(73) Proprietor: SYENSQO SA, 1130 Brussels (BE)
(72) Inventor: KEY, Ross, A., Nottingham Derbyshire NG10 1JW (GB); GOFFIN, Anne-Lise, 7804 Rebaix (BE)
(74) Representative: Kraus & Lederer PartGmbB
(86) International application number: PCT/EP2022/060621
(87) International publication number: WO 2022/223733

(56) References cited:
- EP-A1- 0 017 452
- JP-A- 2012 218 257
- US-A- 3 042 574

## Description

Fiber-reinforced polymer composite materials have widespread use in many industries (including aerospace, automotive, marine, industrial, construction, and a wide variety of consumer products), often being preferred because they are lightweight while still exhibiting high strength and corrosion resistance, particularly in harsh environments. Fiber-reinforced polymer composite materials are typically made from either pre-impregnated materials or from resin infusion processes.

Pre-impregnated materials, or "prepregs" generally refer to fibers (such as carbon fibers) impregnated with a curable matrix resin (such as epoxy). The resin content in the prepreg is relatively high, typically 40%-65% by volume. Multiple plies of prepregs may be cut to size for laying up, then subsequently assembled and shaped in a molding tool. In the case where the prepreg cannot be easily adapted to the shape of the molding tool, heating may be applied to the prepreg in order to gradually deform it to the shape of the molding surface. Fiber-reinforced polymer composite materials may also be made by liquid molding processes that involve resin infusion technologies. In a typical resin infusion process, dry bindered fibers are arranged in a mold as a preform, followed by injection or infusion directly *in-situ* with liquid matrix resin. After injection or infusion, the resin-infused preform is cured to provide a finished composite article. EP 0 017 452 A1 discloses the use of a single layer release film in a method for shaping a composite material , wherein the method comprises:placing a composite material between an upper film and a lower film by creating a pocket between the films which houses the composite material, bringing the upper film and the lower film into intimate contact with the composite material, thereby forming a layered structure, wherein the composite material is held stationary between the upper film and the lower film until heat and force is applied to the layered structure, pre-heating the layered structure in a heating apparatus at a temperature sufficient to either lower the viscosity of the composite material or soften the films, positioning the layered structure in a press tool comprising a male mold and a corresponding female mold separated by a gap, wherein the male mold and the female mold each independently have a non-planar molding surface, compressing the layered structure between the male mold and the female mold by closing the gap between the male mold and the female mold and maintaining the male mold and the female mold in a closed position until the resin is cured.

For both types of material, the process for three-dimensional shaping (or molding) of the composite material is critical to the appearance, properties and performance of the final molded product. It is still customary to shape preforms into detailed geometries using a hand layup process, which is time consuming and often results in significant part-to-part variation. While other, less manual, methods also exist for shaping composite materials (such as vacuum forming methods which may also employ pins, robots and/or actuators to aid in part formation), such methods have their own disadvantages and shortcomings. In addition, such methods are often time consuming and do not take the rheological behavior and cure characteristics of the composite materials into consideration. In addition, the product of such processes is still prone to wrinkling and other imperfections.

In view of the potential drawbacks of composite material processing, including processing time, part-to-part variation and product contamination, there still exists a need to develop faster, improved and more reliable assemblies and processes. It is also desirable to take rheological behavior and cure characteristics into account and, if possible, to provide a process which can take full advantage of existing equipment (*e.g.,* metal stamps or presses).

Methods for shaping a composite material carrying out a double diaphragm mechanical thermoforming process has been successfully developed with a goal of providing an assembly for isolating a composite material from environmental contaminants as well as a molding process that not only addresses the disadvantages and shortcomings of other methods known in the art, but also takes into consideration the rheological behavior and cure characteristics of the composite material and also allows the potential for using existing infrastructure and equipment. This method provides an effective and efficient means for producing complex three-dimensional composite structures in an automated fashion. Thus, three-dimensional composite structures can be produced quickly, repeatedly and on a large-scale

For example, this is how this double diaphragm forming technology has evolved rapidly, making it possible to be use for full scale automotive production.

Composite volumes in the serial automotive market continue to grow due to an ever growing need for lightweighting of the different parts. Likewise, composite volumes in aerospace and Urban Air Mobility (UAM) markets are predicted to increase significantly over the next ten years. In order to meet this growing demand, it will be necessary to increase the part manufacturing rate. Therefore, Original Equipment Manufacturers (OEMs) are increasingly turning to rate capable manufacturing technologies such as compression molding to meet future rate targets.

However, the technical specificities and also the specific rate and performance requirements are not necessarily the same in the automotive, UAM and aerospace markets. In particular, higher temperature curing/performance resin chemistries are required for the aerospace and UAM markets with a curing temperature T_{cure} generally comprises between about 150 and about 190°C.

Methods using a double-diaphragm mechanical process implement diaphragm. In this context, the term "diaphragm" refers to any barrier that divides or separates two distinct physical areas. It also used the term "diaphragm structure" that refers to an assembly of one or more diaphragms that define an exterior space and an isolated interior space, *e.g.,* the area within a sealed pocket and the area outside of the sealed pocket. Generally, the material used to make the diaphragms is not particularly limited and can be, for example, rubbers, silicones, plastics, thermoplastics, or similar materials or can include a film selected from a plastic layer or an elastic layer. The diaphragms may be comprised of a single material or may include multiple materials, *e.g.*, arranged in layers.

Films used as diaphragm exist and comprise one or more layers. However, these films may have significant limitations and lower performances which may prevent their uses, especially in aerospace and UAM markets. In particular, these include limited thermal capability and mechanical performance with a melt temperature too low to be used in these markets limiting the achievable curing temperature range (<150°C). Especially, this can cause melting and/or failure of the film during forming of the composite component at a given T_{cure} comprises between about 150 and about 200°C.

Furthermore, multi-layers films are less easy to use. In particular, certain existing film having unbalanced multi-layer composition also gives rise to film curling during assembly, limiting process robustness and ease of use. Moreover, the use of multi-layers films limits the possibility of recycling these films or at least requires a more complex and expensive process to be set up.

Therefore, there still exists a need to have a film exhibiting extended temperature range to be used in high temperature double-diaphragm mechanical process for forming of complex structural composite components exhibiting good visual surface finish and significantly reducing process takt times without compromising final component thermal and mechanical performance.

In addition to these requirements, one of the desired properties of these films is the ability of self-releasing. However, at high temperature, films can have the disadvantage of sticking to composite components, which can in particular lead to a degraded surface finish.

The present disclosure provides the use of a specific film in method using a double-diaphragm mechanical thermoforming process, for shaping composite materials - both individually and collectively - address these drawbacks.

Applicant discovered that the use of a single polymer, namely a single layer polymethylpentene (PMP) film as release film for high temperature double diaphragm forming (DDF) makes it possible to obtain complex structural composite components, and which can be employed over a wide temperature range and therefore used as a diaphragm for both the automotive and aerospace markets. In addition, this polymethylpentene film provides good visual surface finish of the cured composite part following curing, with no signs of surface porosity or weave distortion and without film failure or whilst maintaining film integrity.

Furthermore, this PMP film has the advantage of being easily self-releasing that makes it possible to have no transfer and/or contamination from composite material to film and/or film to composite material following curing.

Accordingly, the present invention relates to the use of a single layer polymethylpentene film as release film in a method for shaping a composite material, said method comprising:
(a) placing a substantially planar composite material between an upper polymethylpentene film and a lower polymethylpentene by creating a pocket between the films which houses the composite material,
(b) bringing the upper polymethylpentene film and the lower polymethylpentene film into intimate contact with the composite material, thereby forming a layered structure, wherein the composite material is held stationary between the upper polymethylpentene film and the lower polymethylpentene film until heat or force is applied to the layered structure;
(c) optionally pre-heating the layered structure in a heating apparatus at a temperature sufficient to either lower the viscosity of the composite material or soften the films;
(d) positioning the layered structure in a press tool comprising a male mold and a corresponding female mold separated by a gap, wherein the male mold and the female mold each independently have a non-planar molding surface,
(e) compressing the layered structure between the male mold and the female mold by closing the gap between the male mold and the female mold; and
(f) maintaining the male mold and the female mold in a closed position until the viscosity of the layered structure reaches a level sufficient to maintain a molded shape.

According to the present invention, the polymethylpentene film is self-releasing. That is, the film can easily release from the final molded composite part and/or the molded assembly can easily release from the tooling. This offers an undeniable advantage to protect tooling, including reduced tool wear and no requirement for mould sealer or release agent application between mouldings reducing touch labour and final part cost and therefore to facilitate the full scale composite structures production.

Typically, the polymethylpentene film used in the present invention comprises at least about 99 wt%, in particular at least 99.25 wt% of poly(4-methyl-1-pentene). The polymethylpentene film may also comprise polymer additives as thermal or processing stabilizers, antistatic agent, lubricant, ...

According to the present invention, the polymethylpentene film is used for high temperature double diaphragm forming (DDF) of complex composite structures using a press. This film has the advantage of being able to be used over a wide cure temperature range, namely a cure temperature T_{cure} ranges between about 120 and about 200°C, allowing both to cover the range from about 120 to about 170°C, in particular about 120 to about 150°C corresponding to the specifications for the automotive market and the range from about 150 to about 190°C, in particular from about 160 to about 190°C, corresponding to the specifications for the aerospace and UAM markets.

Thus, the polymethylpentene film used as release film in the present invention exhibits specific properties.

At the given cure temperature T_{cure} comprises between about 120 and about 200°C, the film is able to ensure no melting and/or failure and adequate release performance during forming the composite component. Therefore, in some embodiments, the polymethylpentene film has a melt temperature no less than about 205°C, preferably no less than 210°C.

In some embodiments, the thickness (t) of the polymethylpentene film, which depends on composite component geometry, ranges between about 10 microns and about 200 microns, in particular between about 20 microns and about 150 microns, for example between 25 microns and about 100 microns. Preferably, the film has a thickness of between about 30 microns and about 80 microns. This thickness makes it possible to obtain the desired mechanical performance of the film, prevent film wrinkling during preheating and failure during composite component forming.

In some embodiments, the polymethylpentene film has an Elastic Modulus (E) in the range of about 400 to about 900 MPa, preferably of about 550 to about 850 MPa and has a Tensile Strength (σ) in the range of about 10 to about 50 MPa, preferably of about 15 to about 30 MPa. This can help prevent film breakage during composite component forming.

To ensure the desired component geometry can be achieved without failure of the film during forming at a given T_{cure} comprises between about 120 and about 200°C, the film employed in the present invention has a specific elongation at break (ε). In some embodiments, the polymethylpentene film exhibits an elongation at break (ε) in the range of about 50 to about 550%, preferably 110 to about 500%, in particular of about 150 to about 450% in either longitudinal or transverse directions at a rate of about 8 mm/s under ambient conditions, where typically the ambient temperature T_{ambient} being between about 20 and about 25 °C.

In order not to limit the size of composite components, such film has a sufficiently large width. In some embodiments, the product width of the polymethylpentene film is not less than about 1.2 m. Preferably, this product width is not less than about 1.5 m.

Thus, in a preferred embodiment, the polymethylpentene film used according to the invention has:
- melt temperature (Tₘₑₗₜ) no less than about 205°C, preferably no less than about 210°C,
- thickness (t) in the range of about 10 microns to about 200 microns, in particular of about 20 microns to about 150 microns, especially about 30 microns to about 80 microns,
- Elastic Modulus (E) in the range of about 400 to about 900 MPa, preferably of about 550 to about 850 MPa,
- Tensile Strength (σ) in the range of about 10 to about 50 MPa, preferably of about 15 to about 30 MPa, and
- elongation at break (ε) in the range of about 50 to about 550%, preferably 110 to about 500%, in particular of about 150 to about 450% in either longitudinal or transverse directions under ambient conditions and at a rate of about 8 mm/s.

The film thermal properties including melt temperature can be determined using Differential Scanning Calorimetry (DSC) in accordance with ASTM D3418, by using for example a Differential Scanning Calorimeter, such as TA Instruments Q2000.

The film mechanical properties including tensile strength, tensile modulus and elongation at break can be determined using Thin Film Tensile Strength & Elongation testing (ZM45) in accordance with ASTM D882-09, by using for example a Zwick Z250 test machine. Typically, polymethylpentene is a thermoplastic polyolefin that can be obtained by general-purpose equipment for polypropylene and polyethylene. For example, polymethylpentene can be processed using standard thermoplastic processing methods such as injection molding, compression molding, blow molding, rotational molding, extrusion, and wire coating. Furthermore, the polymethylpentene films can be obtained by blow molding or extrusion lamination techniques. Such processes are known to a person skilled in the art.

According to an embodiment of the invention, the polymethylpentene film can be recycled and reused in the method for shaping a composite material as claimed in the present invention. For example, once the used polymethylpentene film is released from the final composite material, this film can be granulated and then extruded, typically with extruder known in the art, to obtain a new film that may be used in a method for shaping a composite material, especially in the method as described above.

As used herein, the term "substantially planar" refers to a material that has one plane that is measurably larger than the other two planes (for example, at least 2, 3, 4 or 5 times larger, or more). In some embodiments, the substantially planar material has thickness variation along the largest plane. For example, the composite material may include reinforcement materials such as pad-ups (i.e., localized increases in the quantity of plies) or ply drops (i.e., localized decreases in the quantity of plies), material changes, and/or areas where the composite transitions, *e.g.*, to fabric. In other embodiments, the substantially planar material exhibits minimal thickness variation along the area of the composite material. For example, the term substantially planar can mean that the composite material has a global thickness variation of no greater than +/- 15% over 90% of the area. In some embodiments, the thickness variation is no greater than +/-10% over 90% of the area. Substantially planar is not intended to denote a perfectly flat material, but also includes materials that have slight variations in concavity and/or convexity.

In the context of the present invention, the method for shaping a composite material can use either a framed or a frameless assembly. In some embodiments, the method includes the use of a framed assembly. The upper film and the lower film are held together by a structural frame comprising a top frame, a center frame and a bottom frame wherein:
the lower film is held between the bottom frame and the center frame; and
the upper film is held between the center frame and the top frame.

In a preferred embodiment, the method includes the use of a framed assembly.

In certain embodiments, the pocket housing the composite material is defined by a structural frame which houses the composite material held between the films. In certain embodiments, the substantially planar composite material is placed between an upper film and a lower film. This creates a pocket between the films which houses the composite material. For example, the lower film having a top surface and a bottom surface can be placed such that its bottom surface contacts the top of the perimeter of the bottom frame. The composite material can be subsequently laid on top of the lower film; a central frame can then be placed on the top surface of the lower film, followed by the upper film and finally a top frame against the upper film. This arrangement forms a pocket between the lower and upper films which houses the composite material. In some embodiments, the central frame may be excluded. The top, central (where present) and bottom frames defines a perimeter which maintains the shape of the polymethylpentene films, *e.g.,* by the positioning of clamps or other fastening means at predetermined intervals around the perimeter. Such top, central and bottom frames can be manufactured based on the size and shape of the composite material to be molded. Optionally, pre-manufactured structural support frames are known in the art for use with conventional metal or composite press tools (*e.g.,* from manufacturers such as Langzauner or Schubert).

In some embodiments the central frame may include a means for removing air, for example a vacuum inlet or other valve. The vacuum inlet, if present, is connected to a vacuum source (*e.g.* a vacuum pump). In some embodiments, the pocket that houses the composite may be a sealed pocket, *e.g.,* an airtight sealed pocket, whereby the structural frame is disposed about the entire periphery of the composite material and impede air or contaminants from entering the pocket.

The upper film and the lower film are brought into intimate contact with the composite material, to form a layered structure. This may be accomplished for example by applying vacuum pressure between the upper film and lower film. In other embodiments, this may be accomplished by physically applying pressure (*e.g.,* by hand or by mechanical means) on the upper and/or lower film(s) to remove air. Vacuum pressure may be desired in certain cases, *e.g.,* to extract the majority of residual air which may hinder molding performance, thus minimizing deformation or wrinkling of the composite material (or its components) or film. The vacuum also prevents film wrinkling and adds stability to the entire assembly. The use of vacuum pressure may also aid in maintaining fiber alignment, provide support to the materials during the process and during shaping, and/or to maintain desired thickness at elevated temperatures. The term "vacuum pressure" as used herein refers to vacuum pressures of less than 1 atmosphere (or less than 1013 mbar). In some embodiments, the vacuum pressure between the films is set to less than about 1 atmosphere, less than about 800 mbar, less than about 700 mbar, or less than about 600 mbar. In some embodiments, the vacuum pressure between the films is set to about 670 mbar. At this point, whether by vacuum or by other means, such as for example mechanical means, the composite material is firmly held between the films, such that it is stationary until the application of heat and/or force. Such stationary layered structure can be advantageous, for example, because the composite material held within the layered structure is not only maintained stationary in its location with sufficient tension across its X and Y axes, but it is also indexed. That is to say, the composite material may be placed (*e.g.,* by automated means) in a specific position between the films within the stationary layered structure. This indexed stationary layered structure may then be placed (*e.g.,* by automated means) in a specific position in the press tool (as described in more detail herein below), such that the press tool consistently engages a predetermined area of the composite material. A stationary layered structure may, therefore, be reliably used to produce multiple copies of a molded product without the need to index each composite material blank individually.

In some embodiments, the composite material can be machined according to a pattern prior to step (a).

The layered structure may, in some cases, be pre-heated in a heating apparatus. The layered structure can be placed in the heating apparatus manually or by automated means, *e.g.,* using an automated shuttle. This heating apparatus can be any heater that can be used in the formation or molding of metal or composite material products, for example, a contact heater or a non-contact heater (*i.e.* ceramic or an infrared (IR) heater). In some cases this pre-heating softens the upper film and the lower film, *e.g.,* so that they are more pliable during formation of the final molded product. In some cases, this pre-heating brings the composite material held within the layered structure to a desired viscosity or temperature to allow complex shapes to be formed from a flat initial layup. Pre-heating may occur in a heating apparatus heated to a temperature of above about 75°C, 100°C, 125°C, 150°C, 175°C, 190°C. This temperature can be adjusted, for example, depending upon the identity of components in the composite material. Such pre-heating is advantageous, for example, if it is desired to minimize heating of the press tool and/or to minimize the amount of time that the layered structure resides within the press tool.

In order to form the final molded product, the layered structure is positioned in a press tool. In some embodiments, no vacuum pressure is applied to any portion of the press tool. In other embodiments, localized vacuum is applied to the tool surface, for example to remove entrapped air between the layered structure and the tool. In such embodiments, however, the vacuum is typically not used as a force to form the shape of the final molded product. The layered structure can be placed in the press tool manually or by automated means, *e.g*., using an automated shuttle. This press tool generally includes a male mold and a female mold, which are separated by a gap. Each mold has a non-planar molding surface. In some embodiments, a mold release agent may be added to the male mold, the female mold, or both. Such mold release agent may be helpful, *e.g.,* for removing the shaped part from the mold while still at temperatures above ambient temperature. In some embodiments, mold release agent is not required. The molding surfaces are fixed, *i.e.,* not reconfigurable. The molding surfaces are also typically matched, *i.e.,* the male mold corresponding approximately to the opposite of the female mold; and in some embodiments may be perfectly matched. However, in some embodiments, the male and female molds are such that, when closed, the thickness between them varies. In certain embodiments, the layered structure is positioned in the gap at a specific, predetermined distance between the male mold and the female mold.

The layered structure is then compressed between the male mold and the female mold, by closing the gap between the molds (step (e)). In some embodiments, this is accomplished by partially closing the gap between the male mold and the female mold to form a smaller gap between the molds. This smaller gap is subsequently closed after a specific time or viscosity is reached. It is understood that "closing the gap" refers to compressing the molds such that a pre-determined final cavity thickness along the Z axis is obtained between them. Final cavity thickness can be adjusted, *e.g.*, by controlling where the molds stop in relation to each other, and the choice of thickness can be made by the operator of the molds and will depend on the nature of the final molded product. In some embodiments, the final cavity thickness is substantially uniform, *i.e.,* the process produces a two-sided molded final product with a thickness that varies by less than 5%. In some embodiments, the process produces a final molded product with a thickness that varies by less than about 4%, *e.g.,* less than about 3%, less than about 2% or even less than about 1%. In other embodiments, the male and female tools may be configured to provide a cavity thickness that purposely varies across the X and Y axes.

In certain embodiments, the male mold and the female mold are maintained at a temperature above ambient temperature. For example, they may be maintained at a temperature of above about 75°C, 100°C, 125°C, 150°C, 175°C, 200°C or even higher, in particular, for example at a temperature between about 120 and about 200°C. This temperature can be adjusted depending upon the identity (and the viscosity and reactivity) of the components in the composite material. The molds, for example, can be maintained at a temperature above the softening point of the binder or matrix material used in the composite material. In some embodiments, the composite material comprises a thermoset material and molds are maintained at temperatures between about 100°C and 200°C. The binder or matrix material in the composite material is in a solid phase at ambient temperature (20°C-25°C), but will soften upon heating. This softening allows molding of the composite material in the press tool and the conformance of the flat preform to the final component shape.

In some embodiments, the molds are maintained at a temperature between about 120°C and 160°C, especially for cured composite parts intended for automotive market. In some other embodiments, the molds are maintained at a temperature between about 150°C and about 190°C, especially for cured composite intended for UAM and aerospace markets.

In some embodiments, the male mold and the female mold are maintained in a closed position for a predetermined time to form a shaped structure. For example, in some embodiments, the molds are heated and maintained in a closed position until a desired viscosity or temperature is reached. In some embodiments, the molds are maintained in a closed position until the viscosity of the composite material is less than about 1.0 x 10⁸ m Pa s. In some embodiments, the molds are heated and maintained in a closed position until the binder or matrix material begins to cross-link. In other embodiments, the molds are not heated, but are maintained in a closed position for a period of time sufficient for the material to maintain a molded shape. Molds may be maintained in a closed position, *e.g*., for between about 1 minute and about 60 minutes, for example, for between about 5 and about 20 minutes or for example, for between about 1 and about 10 minutes,. The length of time that the molds are maintained in a closed position will depend upon a number of factors, including the identity of the composite material and the temperature of the molds.

In certain embodiments, the male mold is driven through the layered structure, while the female mold remains static. In other certain embodiments, the female mold is driven through the layered structure, while the male mold remains static. In other embodiments, the female mold does not remain static, but moves at a rate that is slower than the male mold (such that the male mold still acts predominantly as the forming surface). In still other embodiments, both molds move at approximately the same rate of speed to close the gap between the molds. The molds are driven at a rate and to a final pressure sufficient to deform/mold the composite material to the desired shape. For example, the molds may be driven at a rate of between about 0.4 mm/s and about 500 mm/s, in particular, between about 0.7 mm/s and about 400 mm/s, especially between about 1 mm/s and about 350 mm/s, for example between 5 mm/s and 350 mm/s or between about 50 mm/s and 300 mm/s. Additionally, the molds may be driven to a final pressure of between about 0.2 and about 6.9 N/mm² (about 30 psi and about 1000 psi), in particular between about 0.7 and about 5.5 N/mm² (about 100 psi and about 800 psi), or between about 1.7 and about 5.2 N/mm² (about 250 psi and about 750 psi). In some embodiments, the molds are driven at a rate and to a final pressure that have been selected to control the thickness of the final molded product while avoiding the formation of wrinkles and the distortion of structural fibers. In addition, the molds may be driven at a rate and to a final pressure that have been selected to allow the rapid formation of final molded parts.

The gap between the male mold and the female mold is then opened. The shaped structure may be cooled to below the glass transition temperature of the binder or matrix material while the shaped structure remains on the press tool. However, in some embodiments, the shaped structure is removed from the press tool before it cools to below the glass transition temperature of the binder or matrix material. The shaped structure is all the more easily removed from the press tool thanks to the use of the polymethylpentene release film of the present invention. When the binder or matrix material cools to below its glass transition temperature, the binder or matrix material returns to a solid phase and the composite material retains its newly formed geometry. If the composite material is a preform, such preform will hold its desired shape for subsequent resin infusion.

Once the shaped structure is obtained, the clips and/or fastenings are undone and the different frames are removed from the films. Then, the films and cure composite part are removed and the films are released from the cured composite component.

According to the present invention, the polymethylpentene film is self-releasing. Thus, the films can then easily release from the final molded part in order to obtain good visual surface finish of the molded composite part following curing, with no signs of surface porosity or weave distortion. The film, meanwhile, can be recycled to be reused in a future cycle of double-diaphragm mechanical thermoforming process.

Moreover, if desired the film can be temporarily maintained on the final molded product. For example, a temporary film may be desired, *e.g.,* to protect the component from the environment including contamination prior to further processing i.e. finishing/painting, etc...

As used herein, the term "composite material" refers to an assembly of structural fibers and a binder or matrix material. Structural fibers may be organic fibers, inorganic fibers or mixtures thereof, including for example commercially available structural fibers such as carbon fibers, glass fibers, aramid fibers (*e.g.,* Kevlar), high-modulus polyethylene (PE) fibers, polyester fibers, poly-p-phenylene-benzobisoxazole (PBO) fibers, quartz fibers, alumina fibers, zirconia fibers, silicon carbide fibers, other ceramic fibers, basalt, natural fibers and mixtures thereof. It is noted that end uses that require high-strength composite structures would typically employ fibers having a high tensile strength (*e.g.,* ≥3500 MPa or ≥500 ksi). Such structural fibers may include one or multiple layers of fibrous material in any conventional configuration, including for example, unidirectional tape (uni-tape) webs, non-woven mats or veils, woven fabrics, knitted fabrics, non-crimped fabrics, fiber tows and combinations thereof. It is to be understood that structural fibers may be included as one or multiple plies across all or a portion of the composite material, or in the form of pad-ups or ply drops, with localised increases/decreases in thickness.

The fibrous material is held in place and stabilized by a binder or matrix material, such that alignment of the fibrous material is maintained and the stabilized material can stored, transported and handled (*e.g.,* shaped or otherwise deformed) without fraying, unraveling, pulling apart, buckling, wrinkling or otherwise reducing the integrity of the fibrous material. Fibrous materials held by a small amount of binder (*e.g.,* typically less than about 10% by weight) are typically referred to as fibrous preforms. Such preforms would be suitable for resin infusion applications, such as RTM. Fibrous materials may also be held by larger amounts of matrix materials (generally called "prepregs" when referring to fibers impregnated with a matrix), and would thus be suitable for final product formation without further addition of resin. In certain embodiments, the binder or matrix material is present in the composite material in an amount of at least about 30%, at least about 45%, at least about 40%, or at least about 45%.

The binder or matrix material is generally selected from thermoplastic polymers, thermoset resins, and combinations thereof. When used to form a preform, such thermoplastic polymers and thermoset resins may be introduced in various forms, such as powder, spray, liquid, paste, film, fibers, and non-woven veils. Means for utilizing these various forms are generally known in the art.

Thermoplastic materials include, for example, polyesters, polyamides, polyimides, polycarbonates, poly(methyl methacrylates), polyaromatics, polyesteramides, polyamideimides, polyetherimides, polyaramides, polyarylates, polyaryletherketones, polyetheretherketones, polyetherketoneketones, polyacrylates, poly(ester) carbonates, poly(methyl methacrylates/butyl acrylates), polysulphones, polyarylsulphones, copolymers thereof and combinations thereof. In some embodiments, the thermoplastic material may also include one or more reactive end groups, such as amine or hydroxyl groups, which are reactive to epoxides or curing agents.

Thermoset materials include, for example, epoxy resins, bismaleimide resins, formaldehyde-condensate resins (including formaldehyde-phenol resins), cyanate resins, isocyanate resins, phenolic resins and mixtures thereof. The epoxy resin may be mono or poly-glycidyl derivative of one or more compounds selected from the group consisting of aromatic diamines, aromatic monoprimary amines, aminophenols, polyhydric phenols, polyhydric alcohols, and polycarboxylic acids. The epoxy resins may also be multifunctional (*e.g.,* di-functional, tri-functional, and tetra-functional epoxies).

In some embodiments, a combination of thermoplastic polymer(s) and thermoset resin(s) are used in the composite material. For example, certain combinations may operate with synergistic effect concerning flow control and flexibility. In such combinations, the thermoplastic polymers would provide flow control and flexibility to the blend, dominating the typically low viscosity, brittle thermoset resins.

The use of the specific polymethylpentene film described above not only aids in the molding of composite materials *e.g.*, by maintaining the composite material in a stationary position with sufficient tension across its X and Y axes, but also provides significant additional functional advantages. For example, the arrangement protects the composite material blank from environmental contaminants, such as impurities in the air or on the tooling machinery. This protection enables the (otherwise unmanageable) use of conventional press tools, for the processing of two dimensional preforms to three dimensional complex shapes, and thus that are capable of significantly more complex three dimensional geometries than either vacuum formation or reconfigurable tool technologies. Furthermore, the use of the double-diaphragm arrangement can allow the mold release process to be eliminated from the total process.

The double diaphragm mechanical thermoforming process described herein, therefore, provides an effective and efficient means for producing complex three-dimensional composite structures from two dimensional flat preforms in an automated fashion, and this for both the automotive, UAM and aerospace markets by using a single layer polymethylpentene (PMP) film as release film which can be employed over a wide temperature range making it possible to provide good visual surface finish of the cured composite part following curing, with no signs of surface porosity or weave distortion. Three-dimensional composite structures can be produced quickly, repeatedly and on a large-scale. For example, three-dimensional composite structures can be formed from substantially planar composite material blanks in 1-10 minute cycles or in 5-20 minute cycles, or 10-30 minute cycles, or 20-60 minute cycles depending on desired parts and the identity of the composite material. Such quick, repeatable processes are suitable for the manufacture of automotive parts and paneling, such as hoods, trunks, door panels, fenders and wheel wells and for the manufacture of aerospace/UAM parts, such as frames, ribs, spars and doors.

### EXAMPLES

The following examples are for illustration purposes only, and are not to be construed as limiting the scope of the appended claims.

### Example 1: Double Diaphragm Mechanical Thermoforming, Framed, using a high temperature PMP film and epoxy prepreg according to the invention

A lower flexible diaphragm made of a 76 micron polymethylpentene (PMP) film was positioned onto a bed holding a bottom frame. This film exhibits characteristics reported in table 1.

**Table 1 - Measures of mechanical properties in machine direction (MD) and transverse direction (TD)**

| | |
|---|---|
| Temperature resistance (°C) | >205 |
| Melting point (°C) | 227 |
| Elastic Modulus (E) (MPa) | 602 (MD) |
| | 614 (TD) |
| Tensile Strength (σ) (MPa) | 23.7 (MD) |
| | 17.3 (TD) |
| elongation at break (ε) (%) | 288 (MD) |
| | 121 (TD) |
| thickness (t) (µm) | 76 |

A composite material blank made of a carbon-fiber reinforced epoxy (Solvay, formerly Cytec Industries, CYCOM^{™} EP2750) was laid on top of the lower flexible diaphragm, followed by a center frame having a vacuum inlet. An upper flexible diaphragm made of the same film as the lower flexible diaphragm was then placed such that it covered the center frame and composite material blank. The top, center and bottom frames were clamped together, thereby creating a vacuum tight seal and a sealed pocket bounded by the lower flexible diaphragm, the upper flexible diaphragm and the center frame. A vacuum was then applied to remove air from between the upper flexible diaphragm and the lower flexible diaphragm, until the vacuum pressure reached a minimum of 670 mbar. At that point, the composite material blank was firmly supported by both diaphragms, creating a stationary layered structure.

The layered structure was then shuttled into ceramic non-contact heating apparatus, where it was heated to 150°C. Once the external film temperature reached a minimum of 130°C, it was shuttled into a press tool comprising a matched male mold and female mold, configured in the shape of a structural automotive B-Pillar component. The female mold was then driven toward the male mold at a rate of approximately 4 mm/s (250 mm/min). The male mold remained stationary, and both molds were held at 180°C until cross linking had begun. The shaped structure was removed from the press tool while still hot and allowed to cool after removal. The process for shaping the composite material blank was 25 minutes from start to finish (i.e., first placement of the lower flexible diaphragm to establishment of final shape).

No film failure was observed in the longitudinal direction, with negligible film failure observed in the transverse direction. In addition, no film wrinkling was evident. Release performance of the PMP film according to the invention was very good with some self disbonding evident on cooling. Moreover, the surface finish of the composite part was improved, the surface finish being glossy, and with no observable transfer from film to composite part, or composite part to film.

The thermal properties of the films were determined using a Differential Scanning Calorimetry (DSC) by using the Differential Scanning Calorimeter TA Q2000. A heat/cool/heat procedure was applied screening a temperature range from -30 °C to 300 °C with a cooling and heating rate of 10°C/min.

The mechanical properties of the film were determined in accordance with ASTM D882-09 using a Zwick Z250 test machine. The film was tested in both machine and transverse directions at a test speed of about 8 mm/s (500 mm/min) under ambient conditions of 23°C and 50% relative humidity.

### Example 2: Comparative example - Double Diaphragm Mechanical Thermoforming, Framed using a high temperature nylon film and epoxy prepreg

A lower flexible diaphragm made of a 65 micron nylon (PA6,66) film (Aerovac/Solvay, formerly Cytec Industries, SV3000) was positioned onto a bed holding a bottom frame.

A composite material blank made of a carbon-fiber reinforced epoxy (Solvay, formerly Cytec Industries, CYCOM^{™} EP2750) was laid on top of the lower flexible diaphragm, followed by a center frame having a vacuum inlet. An upper flexible diaphragm made of the same film as the lower flexible diaphragm was then placed such that it covered the center frame and composite material blank. The top, center and bottom frames were clamped together, thereby creating a vacuum tight seal and a sealed pocket bounded by the lower flexible diaphragm, the upper flexible diaphragm and the center frame. A vacuum was then applied to remove air from between the upper flexible diaphragm and the lower flexible diaphragm, until the vacuum pressure reached a minimum of 670 mbar. At that point, the composite material blank was firmly supported by both diaphragms, creating a stationary layered structure.

The layered structure was then shuttled into ceramic non-contact heating apparatus, where it was heated to 150°C. Once the external film temperature reached a minimum of 130°C, it was shuttled into a press tool comprising a matched male mold and female mold, configured in the shape of a structural automotive B-Pillar component. The female mold was then driven toward the male mold at a rate of approximately 4 mm/s. The male mold remained stationary, and both molds were held at 180°C until cross linking had begun. The shaped structure was removed from the press tool while still hot and allowed to cool after removal. The process for shaping the composite material blank was 25 minutes from start to finish (i.e., first placement of the lower flexible diaphragm to establishment of final shape).

We can observe that good film thermal and mechanical performance resulted in negligible film failure, melting and/or splitting in both longitudinal and transverse film orientations. Nevertheless, some film wrinkling was evident on the part surface due to high film tensile strength. Release performance however was very poor as the film exhibited a strong chemical adhesion to the cured component surface following DDF processing. As such, part surface quality could not be quantified.

### Example 3: PMP film recycling

Poly(4-methyl 1-pentene) (PMP) films with a thickness of 75 microns were granulated through a 20 mm diameter Collin Single Screw extruder (L/D=25/1) equipped with three heating Zones. The extruder temperature profiles were set at 230, 250 and 260°C for the Zone 1-3. The melt temperature was 260°C. The extrudate went through a chill roll with rolls at room temperature and then were granulated using a Scheer granulator. The recovered granules are then extruded through a 30 mm diameter Collin Single Screw extruder (L/D=25/1) equipped with three heating zones. The extruder temperature profiles were set at 230, 250 and 260°C for the Zone 1-3. The melt temperature was 260°C. The extrudate, after passing through a film die maintained at 260°C, was then cast onto a roller maintained at 50°C, followed by a cooling roll set at room temperature. The resultant film had a thickness of 3 mils (75 um).

The thermal properties of the films were determined using a Differential Scanning Calorimetry (DSC) by using the Differential Scanning Calorimeter TA Q2000. A heat/cool/heat procedure was applied screening a temperature range from -30 °C to 300 °C with a cooling and heating rate of 10°C/min.

The mechanical properties of the film were determined in accordance with ASTM D882-09 using a Zwick Z250 test machine. The film was tested in both machine and transverse directions at a test speed of about 8 mm/s (500 mm/min) under ambient conditions of 23°C and 50% relative humidity.

## Claims

1. Use of a single layer polymethylpentene film as release film in a method for shaping a composite material, wherein the method comprises:
(a) placing a substantially planar composite material between an upper polymethylpentene film and a lower polymethylpentene film by creating a pocket between the films which houses the composite material, wherein the upper polymethylpentene film and the lower polymethylpentene film are held together by a structural frame comprising a top frame, a center frame and a bottom frame, and wherein the lower film is held between the bottom frame and the center frame,
(b) bringing the upper polymethylpentene film and the lower polymethylpentene film into intimate contact with the composite material, thereby forming a layered structure, wherein the composite material is held stationary between the upper polymethylpentene film and the lower polymethylpentene film until heat or force is applied to the layered structure;
(c) optionally pre-heating the layered structure in a heating apparatus at a temperature sufficient to either lower the viscosity of the composite material or soften the films;
(d) positioning the layered structure in a press tool comprising a male mold and a corresponding female mold separated by a gap, wherein the male mold and the female mold each independently have a non-planar molding surface,
(e) compressing the layered structure between the male mold and the female mold by closing the gap between the male mold and the female mold; and
(f) maintaining the male mold and the female mold in a closed position until the viscosity of the layered structure reaches a level sufficient to maintain a molded shape,
wherein the polymethylpentene film has
- a melting temperature (Tₘₑₗₜ) no less than about 205°C, preferably no less than 210°C,
- a thickness (t) in the range of 20 microns to 150 microns, preferably, 30 microns to 80 microns,
- an elastic modulus (E) in the range of about 400 to about 900 MPa, preferably of about 550 to about 850 MPa,
- a tensile strength (σ) in the range of about 10 to about 50 MPa, preferably of about 15 to about 30 MPa, and
- an elongation at break (ε) in the range of of about 50 to about 550%, preferably 110 to about 500%, in particular of about 150 to about 450% in either longitudinal or transverse directions at a rate of about 8 mm/s under ambient conditions.

2. The use of claim 1, wherein step (e) comprises partially closing the gap between the male mold and the female mold such that a smaller gap is formed between the molds, which smaller gap is subsequently closed after a specific time or viscosity is reached.

3. The use of claim 1 or 2, wherein the male mold and the female mold are maintained at a temperature above ambient temperature.

4. The use of claim 3, wherein the male mold and the female mold are maintained at a temperature above 100°C.

5. The use of claim 4, wherein the male mold and the female mold are maintained at a temperature between about 120°C and about 160°C.

6. The use of claim 5, wherein the male mold and the female mold are maintained at a temperature about 150°C and about 190°C.

7. The use of any one of claims 1 to 6, wherein the polymethylpentene film is a recycled film.

8. The use of any one of claims 1 to 7, wherein step (e) comprises closing the gap between the male mold and the female mold at a speed of between about 0.7 mm/s and about 400 mm/s, while maintaining the male mold and the female mold at a temperature above the softening point of the composite material.

9. The use of any one of claims 1 to 8, wherein step (b) comprises applying a vacuum pressure of at least about 670 mbar between the upper film and the lower film.

10. The use of any one of claims 1 to 9, wherein the male mold and female mold are maintained in a closed position for between about 1 minute and about 60 minutes.

11. The use of claim 10, wherein the center frame supplies a source of vacuum to the assembly.

12. The use of any one of claims 1 to 11, wherein the layered structure is positioned in the press tool and in the optional heating apparatus by automated means.

13. The use of any one of claims 1 to 12, wherein the composite material comprises structural fibers of a material selected from aramid, high-modulus polyethylene (PE), polyester, poly-p-phenylene-benzobisoxazole (PBO), carbon, glass, quartz, alumina, zirconia, silicon carbide, basalt, natural fibers and combinations thereof.

14. The use of any one of claims 1 to 13, wherein the composite material comprises a binder or matrix material selected from thermoplastic polymers, thermoset resins, and combinations thereof.

## Patentansprüche

1. Verwendung einer einschichtigen Polymethylpentenfolie als Trennfolie bei einem Verfahren zum Formen eines Verbundmaterials, wobei das Verfahren umfasst:
(a) Platzieren eines im Wesentlichen planaren Verbundmaterials zwischen einer oberen Polymethylpentenfolie und einer unteren Polymethylpentenfolie durch Erzeugen einer Tasche zwischen den Folien, die das Verbundmaterial aufnimmt, wobei die obere Polymethylpentenfolie und die untere Polymethylpentenfolie durch einen Strukturrahmen, der einen oberen Rahmen, einen mittleren Rahmen und einen unteren Rahmen umfasst, zusammengehalten werden, und wobei die untere Folie zwischen dem unteren Rahmen und dem mittleren Rahmen gehalten wird,
(b) Bringen der oberen Polymethylpentenfolie und der unteren Polymethylpentenfolie in innigen Kontakt mit dem Verbundmaterial, um eine Schichtstruktur zu bilden, wobei das Verbundmaterial zwischen der oberen Polymethylpentenfolie und der unteren Polymethylpentenfolie stationär gehalten wird, bis Wärme oder Kraft auf die Schichtstruktur ausgeübt wird;
(c) gegebenenfalls Vorwärmen der Schichtstruktur in einer Heizvorrichtung bei einer Temperatur, die ausreicht, um entweder die Viskosität des Verbundmaterials zu senken oder die Folien zu erweichen;
(d) Positionieren der Schichtstruktur in einem Presswerkzeug, das eine männliche Form und eine entsprechende weibliche Form umfasst, die durch einen Spalt getrennt sind, wobei die männliche Form und die weibliche Form jeweils unabhängig eine nichtplanare Formgebungsfläche aufweisen,
(e) Komprimieren der Schichtstruktur zwischen der männlichen Form und der weiblichen Form durch Schließen des Spalts zwischen der männlichen Form und der weiblichen Form; und
(f) Halten der männlichen Form und der weiblichen Form in einer geschlossenen Position, bis die Viskosität der Schichtstruktur ein Niveau erreicht, das ausreicht, um eine geformte Form zu bewahren,
wobei die Polymethylpentenfolie aufweist
- eine Schmelztemperatur (T_{Schmelz}) von nicht weniger als etwa 205 °C, vorzugsweise nicht weniger als 210 °C,
- eine Dicke (t) in dem Bereich von 20 Mikrometer bis 150 Mikrometer, vorzugsweise 30 Mikrometer bis 80 Mikrometer,
- einen Elastizitätsmodul (E) in dem Bereich von etwa 400 bis etwa 900 MPa, vorzugsweise von etwa 550 bis etwa 850 MPa,
- eine Zugfestigkeit (σ) in dem Bereich von etwa 10 bis etwa 50 MPa, vorzugsweise von etwa 15 bis etwa 30 MPa, und
- eine Bruchdehnung (ε) in dem Bereich von etwa 50 bis etwa 550 %, vorzugsweise 110 bis etwa 500 %, insbesondere von etwa 150 bis etwa 450 %, in Längs- oder Querrichtung bei einer Rate von etwa 8 mm/s unter Umgebungsbedingungen.

2. Verwendung nach Anspruch 1, wobei Schritt (e) teilweises Schließen des Spalts zwischen der männlichen Form und der weiblichen Form umfasst, so dass ein kleinerer Spalt zwischen den Formen gebildet wird, wobei der kleinere Spalt anschließend nach Erreichen einer spezifischen Zeit oder Viskosität geschlossen wird.

3. Verwendung nach Anspruch 1 oder 2, wobei die männliche Form und die weibliche Form bei einer Temperatur über Umgebungstemperatur gehalten werden.

4. Verwendung nach Anspruch 3, wobei die männliche Form und die weibliche Form bei einer Temperatur über 100 °C gehalten werden.

5. Verwendung nach Anspruch 4, wobei die männliche Form und die weibliche Form bei einer Temperatur zwischen etwa 120 °C und etwa 160 °C gehalten werden.

6. Verwendung nach Anspruch 5, wobei die männliche Form und die weibliche Form bei einer Temperatur von etwa 150 °C und etwa 190 °C gehalten werden.

7. Verwendung nach einem der Ansprüche 1 bis 6, wobei die Polymethylpentenfolie eine recycelte Folie ist.

8. Verwendung nach einem der Ansprüche 1 bis 7, wobei Schritt (e) Schließen des Spalts zwischen der männlichen Form und der weiblichen Form mit einer Geschwindigkeit von zwischen etwa 0,7 mm/s und etwa 400 mm/s umfasst, während die männliche Form und die weibliche Form bei einer Temperatur über dem Erweichungspunkt des Verbundmaterials gehalten werden.

9. Verwendung nach einem der Ansprüche 1 bis 8, wobei Schritt (b) Anlegen eines Unterdrucks von wenigstens etwa 670 mbar zwischen der oberen Folie und der unteren Folie umfasst.

10. Verwendung nach einem der Ansprüche 1 bis 9, wobei die männliche Form und die weibliche Form für zwischen etwa 1 Minute und etwa 60 Minuten in einer geschlossenen Position gehalten werden.

11. Verwendung nach Anspruch 10, wobei der mittlere Rahmen die Baugruppe mit einer Unterdruckquelle versorgt.

12. Verwendung nach einem der Ansprüche 1 bis 11, wobei die Schichtstruktur durch automatisierte Mittel in dem Presswerkzeug und in der optionalen Heizvorrichtung positioniert wird.

13. Verwendung nach einem der Ansprüche 1 bis 12, wobei das Verbundmaterial Strukturfasern aus einem Material ausgewählt aus Aramid, Polyethylen mit hohem Modul (PE), Polyester, Poly-p-phenylenbenzobisoxazol (PBO), Kohlenstoff, Glas, Quarz, Aluminiumoxid, Zirkoniumdioxid, Siliciumcarbid, Basalt, Naturfasern und Kombinationen davon umfasst.

14. Verwendung nach einem der Ansprüche 1 bis 13, wobei das Verbundmaterial ein Bindemittel oder Matrixmaterial ausgewählt aus thermoplastischen Polymeren, duroplastischen Harzen und Kombinationen davon umfasst.

## Revendications

1. Utilisation d'un film de polyméthylpentène monocouche comme film détachable dans un procédé destiné à façonner un matériau composite, le procédé comprenant :
(a) la mise en place d'un matériau composite sensiblement plan entre un film de polyméthylpentène supérieur et un film de polyméthylpentène inférieur par création entre les films d'une poche qui accueille le matériau composite, le film de polyméthylpentène supérieur et le film de polyméthylpentène inférieur étant maintenus ensemble par un cadre structural comprenant un cadre supérieur, un cadre central et un cadre inférieur, et le film inférieur étant maintenu entre le cadre inférieur et le cadre central,
(b) la mise du film de polyméthylpentène supérieur et du film de polyméthylpentène inférieur en contact intime avec le matériau composite, ce qui permet de former une structure stratifiée, le matériau composite étant maintenu immobile entre le film de polyméthylpentène supérieur et le film de polyméthylpentène inférieur jusqu'à ce que de la chaleur ou une force soit appliquée à la structure stratifiée ;
(c) éventuellement, le préchauffage de la structure stratifiée dans un appareil de chauffage à une température suffisante pour abaisser la viscosité du matériau composite ou assouplir les films ;
(d) le positionnement de la structure stratifiée dans un outil de pressage comprenant un moule mâle et un moule femelle correspondant séparés par un espace, le moule mâle et le moule femelle ayant chacun indépendamment une surface de moulage non plane,
e) la compression de la structure stratifiée entre le moule mâle et le moule femelle par fermeture de l'espace entre le moule mâle et le moule femelle ; et
f) le maintien du moule mâle et du moule femelle dans une position fermée jusqu'à ce que la viscosité de la structure stratifiée atteigne un niveau suffisant pour que celle-ci conserve une forme moulée,
dans laquelle le film de polyméthylpentène a
- une température de fusion (T_{fusion}) supérieure ou égale à environ 205 °C, de préférence supérieure ou égale à environ 210 °C,
- une épaisseur (e) comprise entre 20 µm et 150 µm, de préférence entre 30 µm et 80 µm,
- un module d'élasticité (E) compris entre environ 400 et environ 900 MPa, de préférence entre environ 550 et environ 850 MPa,
- une résistance à la traction (σ) comprise entre environ 10 et environ 50 MPa, de préférence entre environ 15 et environ 30 MPa, et
- un allongement à la rupture (ε) comprise entre environ 50 et environ 550 %, de préférence entre 110 et environ 500 %, en particulier entre environ 150 et environ 450 %, dans les directions longitudinale ou transversale à une vitesse d'environ 8 mm/s dans des conditions ambiantes.

2. Utilisation de la revendication 1, dans laquelle l'étape (e) comprend la fermeture partielle de l'espace entre le moule mâle et le moule femelle de telle sorte qu'un espace plus petit soit formé entre les moules, lequel espace plus petit est ensuite fermé une fois qu'un temps ou une viscosité spécifiques ont été atteints.

3. Utilisation de la revendication 1 ou 2, dans laquelle le moule mâle et le moule femelle sont maintenus à une température supérieure à la température ambiante.

4. Utilisation de la revendication 3, dans laquelle le moule mâle et le moule femelle sont maintenus à une température supérieure à 100 °C.

5. Utilisation de la revendication 4, dans laquelle le moule mâle et le moule femelle sont maintenus à une température comprise entre environ 120 °C et environ 160 °C.

6. Utilisation de la revendication 5, dans laquelle le moule mâle et le moule femelle sont maintenus à une température d'environ 150 °C et environ 190 °C.

7. Utilisation de l'une quelconque des revendications 1 à 6, dans laquelle le film de polyméthylpentène est un film recyclé.

8. Utilisation de l'une quelconque des revendications 1 à 7, dans laquelle l'étape (e) comprend la fermeture de l'espace entre le moule mâle et le moule femelle à une vitesse comprise entre environ 0,7 mm/s et environ 400 mm/s, tout en maintenant le moule mâle et le moule femelle à une température supérieure au point de ramollissement du matériau composite.

9. Utilisation de l'une quelconque des revendications 1 à 8, dans laquelle l'étape (b) comprend l'application d'une dépression d'au moins 670 mbar environ entre le film supérieur et le film inférieur.

10. Utilisation de l'une quelconque des revendications 1 à 9, dans laquelle le moule mâle et le moule femelle sont maintenus dans une position fermée pendant environ 1 minute à environ 60 minutes.

11. Utilisation de la revendication 10, dans laquelle le cadre central fournit une source de vide à l'ensemble.

12. Utilisation de l'une quelconque des revendications 1 à 11, dans laquelle la structure stratifiée est positionnée dans l'outil de pressage et dans l'appareil de chauffage facultatif par des moyens automatisés.

13. Utilisation de l'une quelconque des revendications 1 à 12, dans laquelle le matériau composite comprend des fibres structurales d'un matériau choisi parmi l'aramide, le polyéthylène (PE) à haut module, le polyester, le poly-p-phénylène-benzobisoxazole (PBO), le carbone, le verre, le quartz, l'alumine, la zircone, le carbure de silicium, le basalte, les fibres naturelles et les combinaisons de ceux-ci.

14. Utilisation de l'une quelconque des revendications 1 à 13, dans laquelle le matériau composite comprend un liant ou matériau matriciel choisi parmi les polymères thermoplastiques, les résines thermodurcissables et les combinaisons de ceux-ci.
